Europäisches Patentamt

European Patent Office

Office européen des brevets

(19)

(11) Numéro de publication: **0 149 378**

**B1**

(12) **FASCICULE DE BREVET EUROPÉEN**

(45) Date de publication du fascicule du brevet:
20.07.88

(51) Int. Cl.⁴: **H 04 N 11/16**

(21) Numéro de dépôt: **84402486.9**

(22) Date de dépôt: **04.12.84**

(54) Procédé et circuit de démodulation des signaux de chrominance dans un système de télévision de type PAL.

(30) Priorité: **09.12.83 FR 8319761**

(43) Date de publication de la demande:
**24.07.85 Bulletin 85/30**

(45) Mention de la délivrance du brevet:
**20.07.88 Bulletin 88/29**

(84) Etats contractants désignés:
**AT DE FR GB IT SE**

(56) Documents cité:
**EP-A-0 037 317
GB-A-1 406 438**

**FUNKSCHAU, vol. 43, no. 13, 1 juillet 1971, pages 409-412, Munich, DE; M.F. KOUBEK: "Pal-Decoder ohne Laufzeitleitung"**

(73) Titulaire: **THOMSON- CSF, 173, Boulevard Haussmann, F-75379 Paris Cédex 08 (FR)**

(72) Inventeur: **Douziech, Patrick, THOMSON- CSF SCPI 173, bld Haussmann, F-75379 Paris Cedex 08 (FR)**
Inventeur: **Imbert, Michel, THOMSON- CSF SCPI 173, bld Haussmann, F-75379 Paris Cedex 08 (FR)**

(74) Mandataire: **Ruellan- Lemonnier, Brigitte, THOMSON- CSF SCPI 19, avenue de Messine, F-75008 Paris (FR)**

## Description

La présente invention concerne le domaine des circuits de télévison couleur et, plus particulièrement, des circuits de décodage de chrominance dans un téléviseur couleur adapté au système PAL ou des circuits similaires.

Dans les systèmes ci-dessus, les informations de chrominance contenues dans le signal vidéo composite se trouvent être modulées en amplitude et en phase sur une sous-porteuse de fréquence déterminée. Dans le cas du système PAL, la fréquence de la sous-porteuse de chrominance est normalisée à 4,43 MHz et la phase d'un des vecteurs de modulation varie de + ou -90° d'une ligne à l'autre. En conséquence, pour obtenir les signaux de chrominance B-Y et R-Y permettant de reconstituer les informations de couleur, il est nécessaire de démoduler les informations de chrominance contenues dans le signal vidéo composité. Ceci est réalisé classiquement en démodulant, dans un démodulateur synchrone, le signal de chrominance modulé U ou V par un signal de même fréquence que la sous-porteuse de chrominance et présentant une relation de phase déterminée avec les signaux émis. Ce signal est généralement obtenu en sortie d'un oscillateur local ayant une fréquence aussi proche que possible de la fréquence de la sous-porteuse, cet oscillateur étant associé à une boucle d'asservissement sur le signal émis.

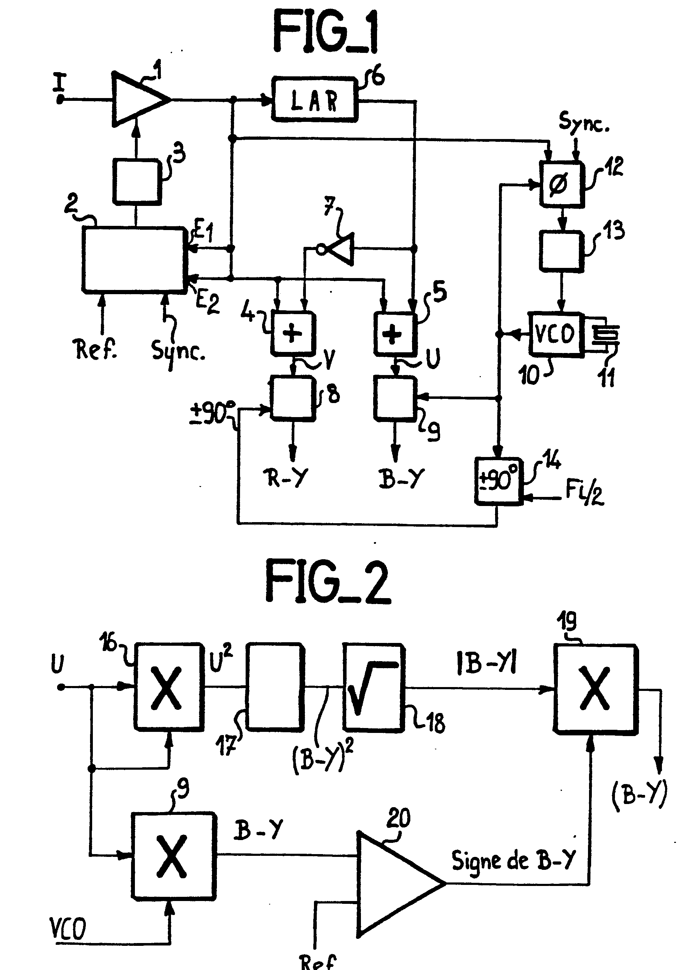

Ainsi un circuit de décodage de chrominance se présente très schématiquement de la façon, illusté à la figure 1. Sur cette figure, on a représenté un circuit de décodage de chrominance classique d'un système PAL-DL qui est le système le plus courant de transmission de télévision du type PAL. Dans ce cas, le signal vidéo composite arrive à l'entrée I après être passé par un filtre éliminant les fréquences trop éloignées de celle de la sous-porteuse de chrominance. Ce signal est ensuite transmis dans un circuit de réglage automatique de gain comprenant un amplificateur à gain variable 1 associé à un circuit de commande de gain 2 fonctionnant pendant la durée d'un signal de synchronisaiton Sync correspondant à la durée de présence de la salve et commandant l'amplificateur variable 1 par l'intermédiaire d'un moyen de filtrage et de maintien 3. Le circuit de commande de gain 2 reçoit la sortie de l'amplificateur variable sur ses premières entrées E1 et E2, en fait le produit et compare ce produit à un signal de référence Ref, pendant la durée du signal de salve comme cela a été indiqué précédemment. La sortie de l'amplificateur variable 1 est adressée à une première entrée d'additionneurs 4 et 5 à l'entrée d'une ligne à retard 6 assurant aux signaux à des fréquences voisines de celle de la sous-porteuse de chrominance un retard de la durée d'une ligne. La sortie dela ligne à retard 6 est transmise aux deuxième entrées des additionneurs 5 et 5, un inverseur 7 étant interposé avant l'entrée vers l'additionneur 4. On obtient donc à la sortie de l'additionneur 4 la différence entre les signaux direct et retardé appelé signal V et à la sortie de l'additionneur 5 leur somme appelé signal U. Les sorties des additionneurs 4 et 5 sont démodulées dans des démodulateurs synchrones 8 et 9 qui fournissent en sortie les signaux de chrominance R-Y et B-Y. Le démodulatuer synchrone 9 reçoit un signal génréré par un oscillateur local asservi à 4,43 MHz avec une certaine phase qu'on appelera phase 0° et le démodulateur 8 reçoit ce même signal mais déphase de + ou -90°C selon les lignes.

L'oscillateur local asservi est constitué par un oscillatuer 10 du type VCO (pour Voltage Controlled Oscillator en langue anglaise ou oscillateur commandé en tension) dont la fréquence de référence est donnée par un quartz 11 et une boucle d'asservissement sur le signal de salve. La boucle d'asservissement est constituée d'un comparateur de phase 12 suivi d'un moyen de filtrage et de maintien 13. Le comparateur de phase 12 reçoit également un signal de synchronisation Sync présent pendant la durée de la salve. Le signal en sortie de l'oscillateur 11 est envoyé directement sur le démodulateur 9 et par l'intermédiaire d'un déphaseur 14 réalisant alternativement un déphasage de ± 90° sur le démodulatuer 8.

Ce type de circuit fonctionne de manière satisfaisante lorsque l'oscillateur 10 est un oscillateur à quarz. Toutefois, il présente un certain nombre d'inconvénients dûs à la présence du quartz. En effet, le quartz est un composant cher et qui ne peut pas être intégré. En conséquence, on cherche à utiliser des VCO sans quartz pour obtenir le signal à la fréquence de la sous-porteuse de chrominance. Or avec les oscillateurs sans quarz on obtient, surtout en présence de bruit, un signal dont la phase est incorrecte, ce qui se traduit par une diminution de l'amplitude des signaux de chrominance B-Y et R-Y et entraîne des défauts visibles sur l'image.

La présente invention a en conséquence pour but de remédier à ces inconvénients en fournissant un nouveau procédé et un nouveau circuit de démodulation des signaux de chrominance dans un système de télévision de type PAL ou similaire utilisant en particulier des oscillatuers sans quarz.

Le procédé de démodulation des signaux de chrominace conforme à la présente invention consisté à:
- démoduler le signal de chrominance modulé U ou V par lui-même;
- filtrer le signal ainsi obtenu pour ne conserver que le carré $(B-Y)^2$ ou $(R-Y)^2$ du signal chrominance;
- extraire la racine carrée de ce signal pour obtenir la valeur absolue |B-Y| ou |R-Y| du signal de chrominance, et
- multiplier ladite valeur absolue par le signe du signal de chrominance B-Y ou R-Y démodulé classiquement pour obtenir le signal de

chrominace B-Y ou R-Y.

La présente invention concerne aussi un circuit pour la mise en oeuvre du procédé ci-dessus. Ce circuit monté dans un circuit de décodage de chrominance comporte en série un multiplicateur réalisant la multiplication du signal de chrominance modulé U ou V par lui-même, un filtre donnant en sortie le carré $(B-Y)^2$ ou $(R-Y)^2$ du signal de chrominance, un dispositif d'extraction de la racine carrée donnant la valeur absolut |B-Y| ou |R-Y| du signal de chrominance, un multiplicateur multiplliant ladite valeur absolue avec signal du signal de chrominance B-Y ou R-Y pour obtenir en sortie ledit signal de chrominance B-Y ou R-Y.

Selon un mode de réalisation préférentiel, le signe du signal de chrominance B-Y ou R-Y est obtenu en envoyant le signal de chrominace B-Y ou R-Y issu respectivement du démodulateur du signal U ou V contenu dans un circuit de décodage de chrominance tel que décrit avec référence à la figure 1 dans un comparateur dont l'autre entrée est connectée à un signal de référence égale à zéro.

En fait le signal issu du démodulateur classique ne peut être utilisé pour obtenir le signal démodulé, car il comporte des défauts d'amplitude dûs à la mauvaise phase éventuelle de l'oscillatuer sans quarz.

Toutefois, le fait de supprimer le quarz bien que donnant un circuit plus complexe, permet de réaliser des économies de coût de fabrications.

D'autres caractéristiques et avantages de la présente invention apparaîtront à la lecture de la description d'un mode de réalisation faite avec référence au dessin ci-annéxe dans lequel:

- la figure 1, déjà décrite, représente de façon générale et sous forme de blocs un mode de réalisation d'un circuit de décodage de chrominance dans un téléviseur de type PAL;

- la figure 2 représente sous forme de blocs un circuit de démodulation d'un des signaux de chrominance conforme à la présente invention.

Dans les figures, les mêmes références désignent les mêmes éléments.

Comme représenté sur la figure 2, le circuit de démodulation d'un des signaux de chrominance, par exempler du signal de chrominace B-Y est constitué par un multiplicateur 16 qui reçoit sur ses deux entrées le signal de chrominance modulé U de manière à réaliser la démodulation du signal U par lui-même.

Le signal de sortie du multiplicateur 16 est envoyé dans un filtre 17 pour éliminer l'harmonique de rang 2 et obtenir en sortie le carré $(B-Y)^2$ du signal de chrominance. Le signal $(B-Y)^2$ est alors envoyé dans un extracteur de racine carrée 18 qui donne en sortie la valeur absolue |B-Y| du signal de chrominance B-Y. Pour cela le signal B-Y est multiplié par le signal représentatif du signe du signal de chrominance B-Y dans un multiplicateur 19 qui donne en sortie le signal de chrominance B-Y.

Le signe du signal de chrominance B-Y peut être obtenu par exemple en utilisant le

démodulateur 9 du circuit de décodage de la figure 1. Ce démodulateur qui réalise la démodulation de U par la fréquence issue d'un oscillateur VCO donne en sortie B-Y. Toutefois, comme expliqué dans l'introduction de la présente demade, lorsque l'oscillateur est un oscillateur sans quartz, dans le cas de signaux bruités, on observe un phénomène de désaturation, à savoir une diminution de l'amplitude du signal B-Y ce qui est incompatible avec un bon fonctiomement du téléviseur. Cependant ce signal peut être utilisé pour obtenir le signe de B-Y, car la désaturation n'affecte pas les "passages au zéro" du signal, seuls nécessaires pour le signe de (B-Y). Pour cela il est envoyé en entrée d'un comparateur 20 dont l'autre entrée reçoit un signal de référence Ref représentant le zéro.

Avec le circuit ci-dessus, puisque le signal U n'est plus démodulé par un signal externe dont la phase peut être incorrecte, mais par lui-même, on n'observe pas de phénomène de désaturation.

Un circuit identique est utilisé pour réaliser la démodulation du signal V et obtenir le signal de chrominance R-Y. Ces deux circuits sont positionnés en sortie respectivement des additionneurs 5 et 4 dans le circuit de décodage de la figure 1. Dans ce cas, le VCO ne comporte pas de quartz et la boucle d'asservissement comporte des circuits annexes pour compenser les variations de la fréquence de repos de l'oscillateur.

Les multiplicateurs 16, 9, 19, le filtre 17, l'extracteur 18 et le comparateur 20 sont des circuits connus de l'homme de métier qui sont réalisés de préférence sous forme intégrée. Ils ne seront pas décrits de manière détaillée dans la présente description.

D'autre part, lorsque l'amplitude du signal de chrominance B-Y ou R-Y est grande devant le gain du multiplicatuer 9, ce multiplicateur réalise aussi la fonction comparaison et dans ce cas un circuit comparateur est inutile.

**Revendications**

1. Un procédé de démodulation des signaux de chrominace B-Y ou R-Y caractérisé en ce qu'il consiste à:

- démoduler le signal de chrominace modulé U ou V par lui-même,

- filtrer le signal ainsi obtenu pour ne conserver que le carré (B-Y) ou (R-Y) du signal de chrominace;

- extraire la racine carrée de ce signal pour obtenir la valeur absolue |B-Y| ou |R-Y| du signal de chrominace, et

- multiplier ladite valeur absolue par le signe du signal de chrominace B-Y ou R-Y démodulé classiquement par obtenir le signal de chrominance B-Y ou R-Y.

2. Un circuit pour la mise en oeuvre du procédé selon la revendication 1 monté dans un circuit de décodage de chrominance, caractérisé en ce qu'il comporte, montés en série, un multiplicateur (16) réalisant la multiplication du signal de chrominance modulé U ou V par lui-même, un filtre (17) donnat en sortie le carrré $(B-Y)^2$ ou $(R-Y)^2$ du signal de chrominace, un dispositif (18) d'extraction de la racine carrée donnant la valeur absolue |B-Y| ou |R-Y∫ du signal de chrominace, un muliplicateur (19) multipliant ladite valeur absolue avec le signe du signal de chrominace B-Y ou R-Y pour obtenir en sortie ledit signal de chrominace B-Y ou R-Y.

3. Un circuit selon la revendication 2, caractérisé en ce qu'il comporte de plus un comparateur (20) comparant le signal de chrominace B-Y ou R-Y provenat des démodulateurs synchrones (8 ou 9) du circuit de décodage de chrominance et un signal de référence correspondat à zéro pour obtenir le signe du signal de chrominace B-Y ou R-Y.

## Patentansprüche

1. Verfahren zum Demodulieren der Chrominanzsignale B-Y oder R-Y, dadurch gekennzeichnet, daß es darin besteht, daß:
- das modulierte Chrominanzsignal U oder V durch sich selbst demoduliert wird,
- das so gewonnene Signal gefiltert wird, um nur das Quadrat $(B-Y)^2$ oder $(R-Y)^2$ des Chrominanzsignals zu bewahren;
- die Quadratwurzel dieses Signals gezogen wird, um den Absolutwert |B-Y| oder |R-Y| des Chrominanzsignals zu gewinnen, und
- der genannte Absolutwert mit dem Vorzeichen des Chrominanzsignals B-Y oder R-Y multipliziert wird, welches in herkömmlicher Weise demoduliert wurde, um das Chrominanzsignal B-Y oder R-Y zu gewinnen.

2. Schaltung zur Durchführung des Verfahrens nach Anspruch 1, welche in eine Chrominanz-Decodierschaltung eingebracht ist, dadurch gekennzeichnet, daß sie in Reihenschaltung einen Multiplizierer (16), welcher die Multiplikation des modulierten Chrominanzsignals U oder V mit sich selbst durchführt, ein Filter (17), das am Ausgang das Quadrat $(B-Y)^2$ oder $(R-Y)^2$ des Chrominanzsignals abgibt, eine Vorrichtung (18) zur Bildung der Quadratwurzel, die den Absolutwert |B-Y| oder |R-Y| des Chrominanzsignals abgibt, und einen Multiplizierer (19) enthält, welcher den genannten Absolutwert mit dem Vorzeichen des Chrominanzsignals B-Y oder R-Y multipliziert, um ausgangsseitig das genannte Chrominanzsignal B-Y oder R-Y zu gewinnen.

3. Schaltung nach Anspruch 2, dadurch gekennzeichnet, daß sie ferner einen Komparator (20) enthält, der das Chrominanzsignal B-Y oder R-Y aus den Synchrondemodulatoren (8 oder 9) der Chrominanz-Decodierschaltung mit einem Referenzsignal vergleicht, welches dem Wert Null entspricht, um das Vorzeichen des Chrominanzsignals B-Y oder R-Y zu gewinnen.

## Claims

1. Method of demodulation of the chrominance signals B-Y or R-Y, characterized in that it consists in:
- demodulating the modulated chrominance signal U or V by itself,
- filtering the thus obtained signal to retain only the square $(B-Y)^2$ or $(R-Y)^2$ of the chrominance signal;
- extracting the square root of this signal to obtain the absolute value |B-Y| or |R-Y| of the chrominance signal, and
- multiplying said absolute value by the sign of the chrominance signal B-Y or R-Y demodulated in conventional manner for obtaining the chrominance signal B-Y or R-Y.

2. Circuit for performing the method according to claim 1, mounted in a chrominance decoding circuit, characterized in that it comprises, mounted in series, a multiplier (16) performing the multiplication of the modulated chrominance signal U or V by itself, a filter (17) supplying the square $(B-Y)^2$ of $(R-Y)^2$ of the chrominance signal on its output, a device (18) for extracting the square root supplying the absolute value |B-Y| or |R-Y| of the chrominance signal, a multiplier (19) multiplying said absolute value by the sign of the chrominance signal B-Y or R-Y to obtain as an output said chrominance signal B-Y or R-Y.

3. Circuit according to claim 2, characterized in that it further comprises a comparator (20) comparing the chrominance signal B-Y or R-Y from the synchronous demodulators (8 or 9) of the chrominance decoding signal and a reference signal corresponding to zero to obtain the sign of the chrominance signal B-Y or R-Y.

0 149 378

1/1

FIG_1

FIG_2